# EUROPEAN PATENT APPLICATION

(11) **EP 4 190 636 A1**
(43) Date of publication of application: **07.06.2023**
(21) Application number: 21211742.8
(22) Date of filing: 01.12.2021
(51) Int. Cl.: B60Q 1/20, B60Q 1/14, G06V 10/82, G06V 20/56

(54) **A SYSTEM AND A METHOD FOR ASSISTING A VEHICLE DRIVER TO DRIVE SAFELY IN FOGGY CONDITIONS**

(71) Applicant: VOLVO TRUCK CORPORATION, 405 08 Göteborg (SE)
(72) Inventor: SUBRAMANIAN, Chidambaram, 27407 NC, Greensboro (US)
(74) Representative: Germain Maureau

(57) **Abstract**

The invention relates to a system (100) for assisting a vehicle driver to drive safely in foggy conditions, comprising:
- one or more sensors (11-14) adapted to sense light/weather conditions outside a vehicle (10) and to produce corresponding sensor signals,
- a processing module (20) operable for obtaining predicted visibility condition data from a database based on the sensor signals produced by the one or more sensors (11-14), the processing module (20) being configured to execute an artificial intelligence algorithm (21) operable for determining the predicted visibility condition data,
- a controlling module (30) configured to generate at least one control signal that is function of the predicted visibility condition data,
- an actuating module (40) adapted to activate or deactivate at least one exterior light emitter (15-17) of the vehicle (10), and/or vary the intensity and/or the direction of a light beam emitted by said at least one exterior light emitter (15-17) based on the at least one control signal.

## Description

### TECHNICAL FIELD

The invention relates generally to the automotive field. More particularly, the invention relates to a system and a method for assisting a vehicle driver to drive safely in foggy conditions.

The invention can be applied in heavy-duty vehicles, such as trucks, buses and construction equipment. The invention may also be used in other vehicles such as a commercial car.

### BACKGROUND

Modern automotive vehicles include a variety of different lamps to provide illumination under different operating conditions. Headlamps are typically controlled to alternately generate low beams and high beams. Low beams provide less illumination and are used at night to illuminate the forward path when other vehicles are present. High beams output significantly more light and are used to illuminate the vehicle's forward path when other vehicles are not present. In addition, fog lamps are also commonly used in foggy conditions. If these lamps are not used correctly, accidents may occur due to the difficulty for the driver to see in front of the vehicle when too much light is reflected and/or dispersed. In particular, when the intensity of the fog is important, the high beam headlamps should be turned off, and the fog lamps should be turn on. Furthermore, depending of the intensity of the fog, the direction and the intensity of the low beam headlamps should advantageously be modified to reduce this light reflection and dispersion.

The existing solutions to this problem involves control systems adapted to control at least one exterior light emitter of a vehicle based on the signal received from a light sensor or a camera. However, these solutions are insufficient to prevent any accident in foggy conditions.

### SUMMARY

An object of the invention is to provide a system and a method, which can assist a vehicle driver to drive safely in foggy conditions.

The object is achieved by a system according to claim 1 and a method according to claim 7.

Thus configured, the present invention permits to control an exterior light emitter of a vehicle based on predicted visibility condition data determined by a processing module configured to execute an artificial intelligence algorithm. Such an artificial intelligence algorithm permits to create analytical models to forecast the weather conditions around the vehicle, and, in particular, to detect whether the vehicle is moving in a foggy area and how intense is the fog. The artificial intelligence algorithm also determines if any adjustments of the operating conditions of the exterior light emitter provide more clear visibility or not in foggy conditions. While training machine learning, lots of data are collected in foggy conditions and normal conditions adjusting the light and manually labelling them as clear or not clear or how much clear it is by several drivers. Creating such analytical models normally requires both specialized competence and understanding of how each of the relevant attributes affects the visibility conditions and a considerable manual effort to collect the extensive input data describing a foggy atmosphere. Thus, by using an artificial intelligence algorithm, the present invention permits to cost efficiently and more accurately predict the visibility conditions in front of the vehicle without requiring such a considerable manual effort. These predicted visibility condition data are advantageously used afterwards to modify the operating conditions of one or more exterior light emitters so as to avoid the light reflection and dispersion issues as mentioned above.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic diagram illustrating one exemplary embodiment of the system of the present invention, and
Fig. 2 illustrates examples of multi-dimensional boundary conditions.

### DETAILED DESCRIPTION OF EXAMPLE EMBODIMENTS OF THE INVENTION

Various embodiments of the disclosure are described in detail below. While specific implementations are described, it should be understood that this is done for illustration purposes only. Other components and configurations may be used without parting from the spirit and scope of the disclosure.

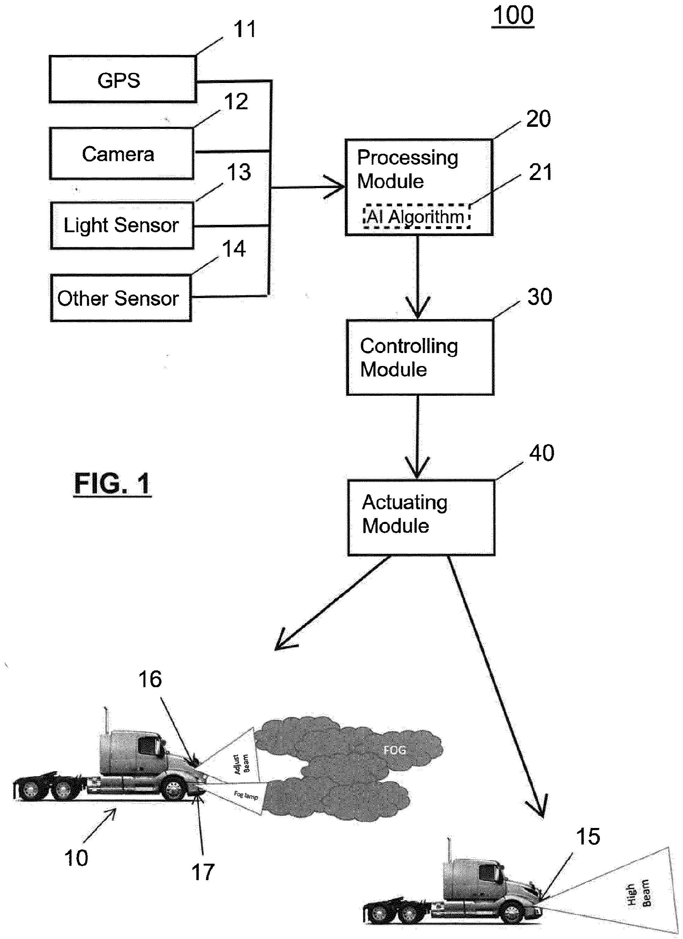

Referring to Figure 1, in one exemplary embodiment of the system 100 of the present disclosure, the vehicle 10 obtains current light and weather condition data from one or more sensors 11-14, such as a GPS sensor 11, a camera 12, a light sensor 13 or other sensors 14, such as a lidar sensor, a temperature sensor, or a moisture sensor. This data may also include any light/weather-type data that could affect the visibility conditions outside the vehicle.

These data are communicated through corresponding sensor signals to a processing module 20 that is operably coupled to the sensors 11-14. This processing module 20 is configured to execute an artificial intelligence algorithm 21, such as a deep learning (DL) / machine learning (ML) or neutral network (NN) algorithm, operable for determining, at least in part, predicted visibility condition data. In particular, the processing module may for example include a processor and a non-transitory computer-readable memory device having stored therein an artificial neutral network (ANN) and instructions which, when executed by the processor, cause the processor to perform operations leading to the determination of the predicted visibility condition data.

The term "processor" may consist in one or more digital signal processors, general purpose microprocessors, application specific integrated circuits, field programmable gate arrays, complex programmable logic devices, or other equivalent integrated or discrete logic circuitry.

In a specific embodiment of the present disclosure, the operations performed by the processor include the receipt of the sensor signals emitted by the sensors 11-14 while the vehicle is moving, the treatment of the sensor signals using an artificial neural network, resulting in an evaluation, and the determination of the predicted visibility condition data based on the evaluation. In a preferred embodiment, the processor is adapted to evaluate the intensity of the fog. This evaluation can be performed using Python, MatLab^{®}, or other development software configured to construct an artificial neural network based on factor-specific data. Such development software are generally trained by training data collected by vehicle manufacturer. These training data consist in sensor data for known light/weather conditions and/or known operating conditions. For example, the vehicle manufacturer can collect sensor data from the vehicles having known operating conditions of the high beam or low beam headlamp and/or the fog lamp while the vehicle is driven in a plurality of specific light/weather conditions. In particular, lots of data are collected in foggy conditions and normal conditions adjusting the light and manually labelling them as clear or not clear or how much clear it is by several drivers.

The below table contains a list of variables that can be used as training data for training the artificial intelligence algorithm, said training data being combined to provide a visibility level.

| **Variable 1** | **Variable 2** | **Variable 3** | **Variable 4** | **Variable 5** | **Output** |
|---|---|---|---|---|---|
| **Driver (Difference between Drivers include age, height and eye sight strength)** | **Fog Condition** | **Rain Condition** | **Geographical Condition** | **Time of Driving** | **Visibility Level** |
| Driver 1 | Light | Light | As many different parts of the world as possible | Morning | Clear |
| Driver 2 | Medium | Medium | Flat lands | Afternoon | Not Very Clear |
| Driver 3 | Heavy | Heavy | Hilly regions | Evening | Adjustable |
| Driver 4 | | | | Night | Bad |
| Driver 5 | | | | Mid night | Very Bad |
| Driver 6 | | | | Early Morning | |
| Driver 7 | | | | | |
| Driver 8 | | | | | |
| Driver 9 | | | | | |
| Driver 10 | | | | | |

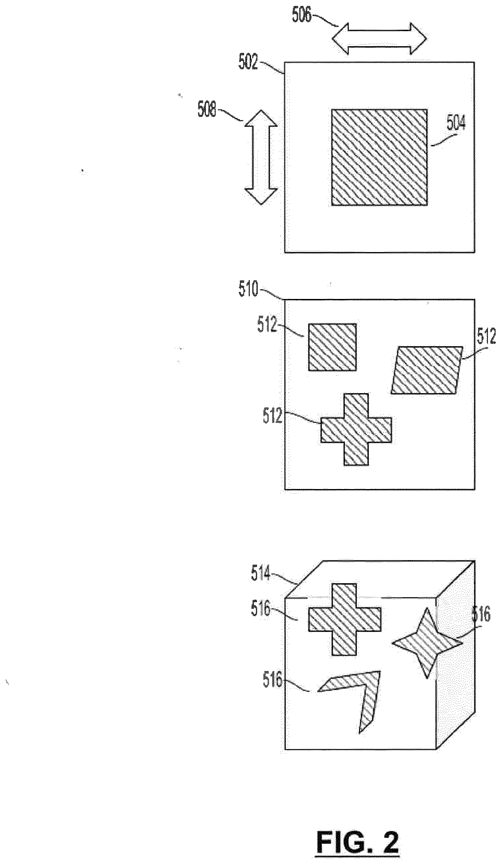

Once trained, the artificial neural network is adapted to define multidimensional boundary conditions for each of the plurality of possible light/weather conditions. Figure 2 illustrates examples of multi-dimensional boundary conditions. A first example 502 of a two dimensional boundary condition 504, where the specific ranges 506, 508 of each input are defined, such that determination if the boundary is met can be readily determined. A second example 510 illustrates another two-dimensional set of conditions. However, in this case, the boundaries 512 are non-contiguous and would be more difficult to interpret. In a third example 514 illustrating three-dimensional boundary conditions, the boundaries can extend in multiple dimensions. In reality, the number of features used to generate the ANN model defines the number of dimensions used to define boundary conditions.

The predicted visibility condition data determined by the processing module 20 are thereafter transmitted to a controlling module 30 that is operably coupled to the processing module 20. This controlling module 30 is adapted to generate one or more control signals that are function of the predicted visibility condition data. These control signals can for example correspond to specific adjustments of the operating conditions of one or more external light emitters of the vehicle, such adjustments permitting to compensate for predicted visibility conditions experienced by the vehicle, and, in particular, permitting to avoid reflection and dispersion of the light beam emitted by said external light emitters in foggy conditions and when the intensity of the fog evaluated by the processing module 20 is greater than a predetermined value.

As illustrated in Figure 1, these external light emitters may be a high beam headlamp 15, a low beam headlamp 16 and/or a fog lamp 17.

The control signals produced by the control module 30 are then transmitted to an actuating module 40 that is operably coupled to the control module 30. This actuating module 40 is adapted to separately activate or deactivate the external light emitters 15-17 and/or to separately vary the intensity and/or the direction of the light beam emitted by said external light emitters 15-17 based on the control signals received from the controlling module 30. In particular, the actuating module 40 can for example deactivate the high beam headlamp 15 and activate the fog lamp 17 when the intensity of the fog is evaluated as being greater than a predetermined value by the processing module 20, thus improving the visibility conditions experienced by the vehicle driver and limiting the risk of an accident.

It is to be understood that the present invention is not limited to the embodiments described above and illustrated in the drawings; rather, the skilled person will recognize that many changes and modifications may be made within the scope of the appended claims.

## Claims

**1.** A system (100) for assisting a vehicle driver to drive safely in foggy conditions, comprising:
- one or more sensors (11-14) adapted to sense light/weather conditions outside a vehicle (10) and to produce corresponding sensor signals,
- a processing module (20) operable for obtaining predicted visibility condition data from a database based on the sensor signals produced by the one or more sensors (11-14), the processing module (20) being configured to execute an artificial intelligence algorithm (21) operable for determining the predicted visibility condition data,
- a controlling module (30) configured to generate at least one control signal that is function of the predicted visibility condition data,
- an actuating module (40) adapted to activate or deactivate at least one exterior light emitter (15-17) of the vehicle (10), and/or vary the intensity and/or the direction of a light beam emitted by said at least one exterior light emitter (15-17) based on the at least one control signal.

**2.** The system (100) according to claim 1, wherein the processing module (20) includes a processor and a non-transitory computer-readable memory device having stored therein an artificial neutral network and instructions which, when executed by the processor, cause the processor to perform operations comprising:
receiving sensor signals from the one or more sensors (11-14) while the vehicle (10) is moving;
evaluating the sensor signals using an artificial neural network, resulting in an evaluation; and
determining the predicted visibility condition data based on the evaluation.

**2.** The system (100) according to claim 1, wherein the sensors (11-14) are selected from the group consisting of a camera, a light sensor, a lidar sensor, a GPS sensor, a temperature sensor and a moisture sensor.

**3.** The system (100) according to claim 1 or claim 2, wherein the at least one exterior light emitter is selected from the group consisting of a high beam headlamp (15), a low beam headlamp (16) and a fog lamp (17).

**4.** The system (100) according to any claims 1 to 3, wherein the processing module (20) is adapted to evaluate the intensity of the fog based on the sensor signals.

**5.** The system (100) according to claim 4, wherein the actuating module (40) is adapted to deactivate a high beam headlamp (15) and to activate a fog lamp (17) when the intensity of the fog is greater than a predetermined value.

**6.** A vehicle (10) comprising a system (100) according to any claims 1 to 5.

**7.** A method for assisting a vehicle driver to drive safely, comprising the steps of:
- sensing light/weather conditions outside a vehicle (10);
- predicting visibility condition data based on the detected light/weather conditions, the predicting step involving an artificial intelligence algorithm (21);
- generating at least one control signal that is function of the predicted visibility condition data;
- activating or deactivating at least one exterior light emitter (15-17) of the vehicle (10), and/or varying the intensity and the direction of a light beam emitted by said at least one exterior light emitter (15-17) based on the at least one control signal.

**8.** The method according to claim 7, wherein the predicting step includes the following steps:
receiving sensor signals from one or more sensors (11-14) while the vehicle (10) is moving;
evaluating the sensor signals using an artificial neural network, resulting in an evaluation; and
determining the predicted visibility condition data based on the evaluation.

**9.** The method according to claim 8, wherein the sensors (11-14) are selected from the group consisting of a camera, a light sensor, a lidar sensor, a GPS sensor, a temperature sensor and a moisture sensor.

**10.** The method according to any claims 7 to 9, wherein the at least one exterior light emitter is selected from the group consisting of a high beam headlamp (15), a low beam headlamp (16) and a fog lamp (17).

**11.** The method according to any claims 7 to 10, wherein the intensity of the fog is evaluated during the predicting step.

**12.** The method according to claim 11, wherein a high beam headlamp (15) is deactivated and a fog lamp (17) is activated when the intensity of the fog is above a predetermined value.
